# EUROPEAN PATENT SPECIFICATION

(11) **EP 0 894 671 B1**
(45) Date of publication and mention of the grant of the patent: **02.10.2002**
(21) Application number: 98305975.9
(22) Date of filing: 28.07.1998
(51) Int. Cl.: B60R 1/06

(54) **Vehicle mirror apparatus**
Fahrzeugspiegel
Rétroviseur de véhicule

(30) Priority: 28.07.1997 BR 9702665
(43) Date of publication of application: 03.02.1999
(73) Proprietor: METAGAL INDUSTRIA E COMERCIO LTDA., Estado de Sao Paulo CEP:09990-090 (BR)
(72) Inventor: Otenio, Dejail, Sao Paulo, CEP:09861-370 (BR); Cermark, Roberto, Sao Paulo, CEP:04943-020 (BR)
(74) Representative: Bankes, Stephen Charles Digby

(56) References cited:
- EP-A- 0 458 480
- EP-A- 0 705 733
- EP-A- 0 794 087
- DE-A- 2 809 888
- FR-A- 2 539 361
- FR-A- 2 562 848
- FR-A- 2 714 638
- GB-A- 2 266 690

## Description

The invention relates to a vehicle mirror apparatus according the preamble of claim 1, particularly for external side view mirrors of motor vehicles.

External side view mirrors on motor vehicles according the preamble of claim 1 are well known e.g. Fr 2 714 638. They comprise a mirror plate, an adjustable mounting, a housing for the mirror plate and the adjustable mounting, and a base for the housing where the base is attached to the body of a vehicle. The movable part of the adjustable mounting is attached to the rear face of the mirror plate and its fixed part is attached to the rear internal wall of the housing.

Adjustable mirror plates are fitted in two main types of mechanisms.

The mirror plate in one type of mechanism is manually adjusted by the driver of the vehicle with his hand. This is to be known henceforth as the "hand-set" type mechanism.

The mirror plate in the other main type of mechanism is adjusted by remote control. The mechanism usually includes at least three cables, each of which is attached at one end to the movable part of the adjustable mounting and at the other end to an operating lever mounted on the inside face of the door of the vehicle. When this lever is moved, the attached cables cause the movable part of the adjustable mounting to move in relation to its fixed part, thus moving the mirror plate. This mechanism is to known henceforth as the remote control type mechanism.

The two mechanisms each require a different adjustable mounting. The hand adjustable apparatus requires a mounting that is stiffer to move than the remote control apparatus.

This complicates the manufacturing process, since not all the same tools can be used to make different mechanisms. This is undesirable from both technical and economic points of view.

Another problem connected with both mechanisms is that when the vehicle is in use, it is not unusual for the mirror plate to vibrate, impairing the driver's view, and causing the position of the mirror to change. Factors causing such vibration include the geometry of the mirror, the level of vibrations generated by the operation of the vehicle, and the unevenness of the road surface.

Studies are often conducted to detect the intensity and the direction of the vibration in order to solve this problem and many mirrors are equipped with anti-vibration devices. One anti-vibration device has pins projecting from the inside face of the mirror housing, deployed so that the free tips of the pins sustain the position of the mirror plate.

Nevertheless, this type of solution complicates the manufacturing process, which is undesirable.

The present invention consists in vehicle mirror apparatus for attachment to the body of a vehicle comprising a mirror plate, a multi-use adjustable mounting therefor, and a housing for the mirror plate and the mounting, wherein said adjustable mounting comprises a concave fixed part having a base attached to the housing, a movable part having a ring with a convex outer surface matching an inner surface of said fixed part whereby said ring fits tight to and slides within said fixed part, said movable part also having a hollow section open at one end that projects from and is concentric with said ring, the rear face of the mirror plate being attached to the base of said hollow section, and connecting means between said fixed part and said movable part for the adjustment of torque and/or vibration absorption where the torque required for a hand-set mirror type mechanism is greater than that required for a remote control mirror type mechanism.

The fixed part preferably has a part-spherical inner surface, facing outwardly from an inside face of a forward housing wall, the movable part having a matching part-spherical outer surface that is tightly set and slides within the fixed part, and from which projects an inner truncated conical portion, on which is seated the mirror plate. In a preferred embodiment a U-shaped connecting element connects the fixed and moving parts and provides for torque setting and/or attenuation of vibration. In one embodiment the ends of the U-shaped element are turned outwards and attached to a pair of hook shaped projections protruding from the base of the inside portion of the movable part, so that the hook shaped projections and/or ends of the U-shaped element incorporate the means for adjusting between a tighter axial assembly that is suitable for the hand-set type mechanism and a looser axial assembly suitable for a remote control mechanism, and between the ends is an arc shaped middle portion that is retained more or less tightly against, but free to slide on, a curved guide surface which is secured to, or integral with, the fixed part of the mounting, the middle portion being chosen to determine the need for a greater force to move the mirror plate around a geometric axis "x" extending transversely to the connection element, than the force required to move it around a "y" axis that is in the same direction as the connecting element.

Friction between the connecting element and the curved guide surface ensures that a greater amount of effort is required to move the connecting element of the movable part of the adjustable mounting, and hence the attached mirror plate around the "x" axis, than is necessary to move them around the "y" axis, as mentioned above, the adjustable mounting is assembled in a way that the connecting element remains perpendicular to the geometric axis around which the mirror plate would, in use, have the greater vibration, or, in other words, that the alleged geometric "x" axis coincides with the geometric axis around which the mirror plate vibrates. Therefore, in this manner the adjustable mounting besides its normal function, also acts to attenuate vibration.

An embodiment of the present invention will now be described by way of example with reference to the accompanying drawings, in which:
Figure 1 is a plan view of the adjustable mounting viewed from the face that receives the rear face of the mirror plate; and
Figure 2 is a split cross-section of Figure 1.

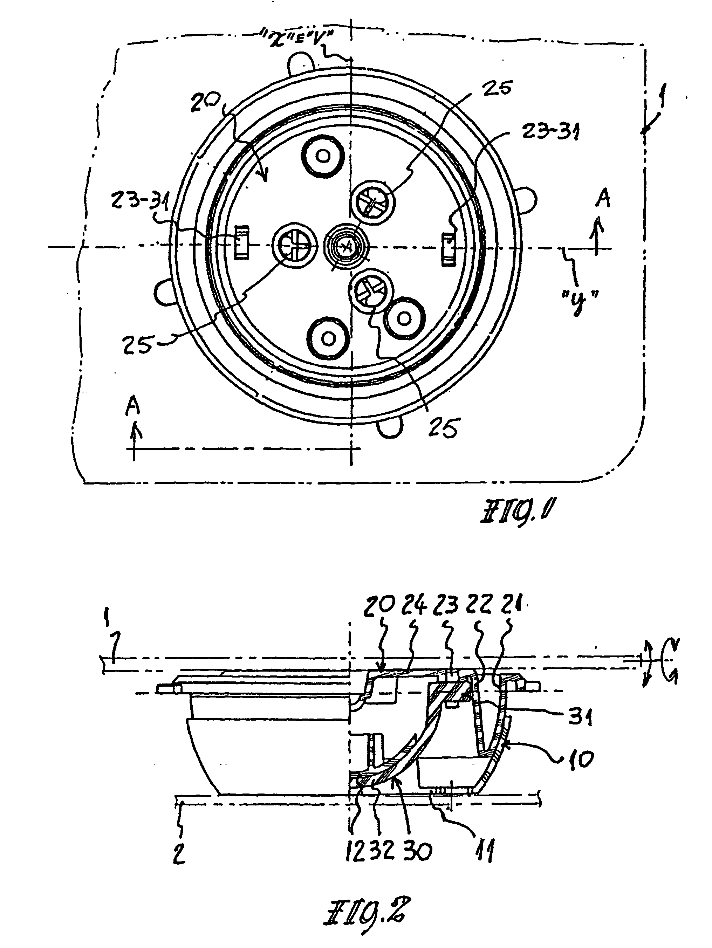

Referring to Figures 1 and 2, the apparatus comprises a mirror plate 1, an adjustable mounting, a housing 2 for the mirror plate 1 and the adjustable mounting, and a base (not shown) for the housing, which base is attachable to the body of a vehicle. The mirror is of the type in which the position of the mirror plate 1 is either manually adjusted by the driver of the vehicle with his hand or it is adjusted from inside the vehicle via a lever and cable remote control mechanism.

The adjustable mounting comprises a bowl-shaped fixed part 10 with a flat base 11 that is attached to the inside face of the rear wall of the housing 2 and has a part-spherical inner surface. The movable part 20 of the adjustable mounting comprises a ring 21 whose outer surface is complementary to the inner surface of the fixed part 10 so that the ring 21 tightly fits inside it and is able to slide within it. A truncated cone 22 protrudes from the inside of the ring 21 and is concentric with it. The rear face of the mirror plate 1 is attached to the truncated end 24 of the cone 22. A "U" shaped connecting element 30 is provided for the setting of the torque, and for vibration absorption. The two ends 31 of this element are outwardly turned and are respectively attached to a pair of hook shaped projections 23 that protrude from the underside of the truncated end 24 of the cone 22 so that the hook projections 23 and/or the ends 31 of the "U" shaped element 30 incorporate the means for an axially "tighter" assembly of the adjustable mounting that is adequate for the "hand-set" type mechanism or an axially "loser" assembly that is adequate for the remote control type mechanism. The intermediate arched section 32 between the two ends 31 of the "U" shaped element 30 is retained tightly to and is free to slide on a curved guide surface 12 that is attached to the fixed part 10 of the adjustable mounting. Friction between the U-shaped element and the guide surface determines that a greater amount of force is required to move the movable part 20 of the adjustable mounting and consequently the mirror plate 1 attached to it, around an axis "x" that is perpendicular to the connecting element 30, and that a smaller amount of force is required to move the movable part 20 and mirror plate 1 around an axis "y", which is deployed in the same direction as the connecting element 30 since the hook projections allow the movable part 20 to rotate relative to the U-shaped element 30.

The adjustable mounting is also an anti-vibration device for the mirror plate 1. The movable part 20 and the attached mirror plate 1 vibrates more about the "x" axis than around the "y" axis The "U" shaped connecting element 30 of the movable part 20 and the guide surface 12 of the fixed part 10, on which it slides are perpendicular to an axis "v" which is the same as axis "x" (see Figure 1), resisting the motion of the movable part 20 of the adjustable mounting and mirror plate 1, and thus eliminating or reducing the amount of vibration.

There are apertures (not shown) in the base 11 of the fixed part 10 of the adjustable mounting to take fixing means that attach the mounting to the wall of the housing 2.

The remote control type mechanism is similar to the "hand-set" type mechanism except that a second pair of hook shaped projections (not shown) are additionally deployed in a perpendicular alignment to the first pair 23, where the second pair receive the ends 31 of the connection element 30 in a loser manner, in order to provide less axial tightening and thus less torque in order to adjust the mirror plate 1. This is more suitable for the remote control type mechanism. The truncated end 24 of the cone 22 of the movable part 20 is provided with apertures 25 to receive the ends of the cables of the remote control mechanism.

In another embodiment (not shown), the truncated end 24 of the cone 22 of the movable part 20 has a pair of hook shaped projections, and the ends 31 of the connection element 30 are turned outwardly and are staggered. This arrangement can therefore take thicker intermediate arched sections 32 determining a greater axial tightening, and requires a greater torque which is appropriate for the "hand-set" type mechanism and thinner intermediate arched sections 32 determining a lesser axial tightening and requires a lesser torque which is appropriate for remote control type mechanisms.

Instead of the torque adjustment being determined by the hook shaped projections 23 of the movable part 20 of the adjustable mounting, and/or the ends 31 of the connection element 30, as described above, the torque can be determined by a helicoidal spring (not shown), assembled so as to operate by compression or traction between the central areas of the fixed and movable parts 10,20. This provides a lesser or greater axial tightening, between the fixed part 10 and the movable part 20 and therefore greater or lesser torque adjustments are required which are adequate for the "hand-set" and the remote control type mechanisms respectively.

The helicoidal spring can also work in conjunction with the hook shaped projections 23 of the movable part 20 of the adjustable mounting and/or the ends 31 of the connection elements 30 in the determination of the adjustment torque between the fixed and movable parts 10,20 of the mounting.

Parts of the intermediate section 32 of the connecting element 30 and the guide surface 12 of the fixed part 10 of the adjustable mounting that receives the intermediate section 32, may be determined by the type of mirror that the adjustable mounting is designed for and by the level of vibration to which the connecting element 30 is subjected to around the "v" axis so as to provide an adequate degree of friction to absorb the vibrations.

The distance between the curved guide 12 of the fixed part 10 of the adjustable mounting and the pair of hook shaped projections 23 of the movable part 20 that receives the ends 31 of the "U" shaped connecting element 30 required for the "hand-set" type mechanism is slightly greater than the distance between the curved guide 12 and the pair of hook shaped projections 23 of the movable part 20 required for the remote control type mechanism.

There can thus be provided an adjustable mounting that can be used in both the hand-set type mechanism and the remote control type mechanism and can act as an anti-vibration device. Although fulfilling the foregoing purposes, the described mounting is of a simple construction and is manufactured by a simple process that is both technically and economically acceptable.

## Claims

1. Vehicle mirror apparatus for attachment to the body of a vehicle comprising a mirror plate (1), a multi-use adjustable mounting therefor, and a housing (2) for the mirror plate and the mounting, wherein said adjustable mounting comprises a concave fixed part (10) having a base (11) attached to the housing (2); a movable part (20) having a ring (21) with a convex outer surface matching an inner surface of said fixed part (10) whereby said ring (21) fits tight to and slides within said fixed part (10), and connecting means (30,31,32) between said fixed part and said movable part, **characterised in that** said movable part also has a hollow section (22) open at one end that projects from and is concentric with said ring, the rear face of the mirror plate (1) being attached to the base (24) of said hollow section ; and said connecting means (30, 31, 32) being adapted for the adjustment of torque and/or vibration absorption where the torque required for a "hand-set" mirror type mechanism is greater than that required for a remote control mirror type mechanism.

2. Vehicle mirror apparatus according to claim 1, wherein said connecting means includes a "U" shaped connecting element (30) comprising out turned ends (31) that are attached to attaching means protruding from the base (24) of said hollow section (22); and an arcuate intermediate section (32) which is retained tightly to, but free to slide on, a curved guide surface (12) attached to or integral with said fixed part (10) of the adjustable mounting, whereby a greater amount of force is required to move the movable part (20) and consequently the mirror plate (1) around an axis "x" that is perpendicular to the connecting element (30) and the intermediate section (32), and a smaller amount of force is required to move the movable part (20) and the mirror plate (1) around an axis "y" deployed in the same direction as the connecting element (30).

3. Vehicle mirror apparatus according to claim 2, wherein said adjustable mounting also acts as an anti-vibration device for the mirror plate (1), where said "U" shaped connecting element (30) that slides on said guide surface (12) of the fixed part (10) are perpendicular to an axis "v" around which the movable part (20) and the attached mirror plate (1) vibrate the most.

4. Vehicle mirror apparatus according to claim 3, wherein the intermediate section (32) of the connecting element (30) and the guide surface (12) of the fixed part (10) of the adjustable mounting receiving said section (32), have parts that are determined by the type of mirror that the adjustable mounting is designed for and by the level of vibration to which the connecting element is subjected to around said "v" axis in order to provide an adequate level of friction to absorb the vibrations.

5. Vehicle mirror apparatus according to any one of claims 2 to 4, wherein the ends (31) of the connecting element (30) that are outwardly turned are staggered.

6. Vehicle mirror apparatus according to any one of claims 2 to 5, wherein said attaching means comprise a pair of hook shaped projections (23).

7. Vehicle mirror apparatus according to claim 6, wherein a second pair of hook shaped projections deployed in an alignment transverse to that of the first pair (33) receives the ends (31) of the connection element (30) in a less tight form than said first pair, to provide a reduced degree of friction suitable for remote control type mechanisms.

8. Vehicle mirror apparatus according to claim 7, wherein said base (24) of the hollow section (22) of the movable part (20) includes at least one aperture (25) that receives at least one cable required for said remote control mirror type mechanism.

9. Vehicle mirror apparatus according to any one of claims 6 to 8, wherein the distance between the surface guide (12) of the fixed part (10) of the adjustable mounting and the pair of hook shaped projections (23) of the movable part (20) that receives the ends (31) of the "U" shaped connecting element (30) required for the "hand-set" type mechanism is slightly greater than the distance between the surface guide (12) and the pair of hook shaped projections (23) of the movable part (20) required for the remote control type mechanism.

10. Vehicle mirror apparatus according to any preceding claim, wherein said connecting means comprises an axial helicoidal spring, that is assembled to operate by compression or traction between said fixed part (10) and said movable part (20).

11. Vehicle mirror apparatus according to any one of the preceding claims, wherein said apparatus comprises an external side view mirror.

## Patentansprüche

1. Fahrzeugspiegelvorrichtung zur Anbringung an dem Aufbau eines Fahrzeugs, enthaltend eine Spiegelplatte (1), eine verstellbare Mehrzweckhalterung für diese und ein Gehäuse (2) für die Spiegelplatte und die Halterung, wobei die verstellbare Halterung einen konkaven feststehenden Teil (10), der eine an dem Gehäuse (2) befestigte Basis (11) hat; einen beweglichen Teil (20), der einen Ring (21) mit einer konvexen äußeren Oberfläche hat, die mit einer inneren Oberfläche des feststehenden Teiles (10) übereinstimmt, wobei der Ring (21) eng in den feststehenden Teil (10) paßt und in diesem gleitet, sowie eine Verbindungseinrichtung (30, 31, 32) zwischen dem feststehenden Teil und dem beweglichen Teil enthält, **dadurch gekennzeichnet, daß** der bewegliche Teil ferner einen an einem Ende offenen hohlen Abschnitt (22) hat, der von dem Ring vorragt und mit diesem konzentrisch ist, wobei die Rückseite der Spiegelplatte (1) an der Basis (24) des hohlen Abschnitts befestigt ist; und die Verbindungseinrichtung (30, 31, 32) für die Einstellung des Drehmoments und/oder die Absorption von Vibrationen ausgelegt ist, wobei das für einen Spiegelmechanismus des "von Hand einstellbaren" Typs erforderliche Drehmoment größer ist als das für einen Spiegelmechanismus des ferngesteuerten Typs erforderliche.

2. Fahrzeugspiegelvorrichtung nach Anspruch 1, bei welcher die Verbindungseinrichtung ein "U"-förmiges Verbindungselement (30), das nach außen gebogene Enden (31) enthält, die an einer Befestigungseinrichtung befestigt werden, die von der Basis (24) des hohlen Abschnitts (22) vorragt, und einen bogenförmigen Zwischenabschnitt (32) enthält, der eng, aber frei gleitend an einer gekrümmten Führungsoberfläche (12) gehalten ist, die mit dem feststehenden Teil (10) der verstellbaren Halterung einstückig ist oder an diesem befestigt ist, wobei eine größere Kraft erforderlich ist, um den beweglichen Teil (20) und damit die Spiegelplatte (1) um eine "x"-Achse zu bewegen, die zu dem Verbindungselement (30) und dem Zwischenabschnitt (32) senkrecht ist, und eine kleinere Kraft erforderlich ist, um den beweglichen Teil (20) und die Spiegelplatte (1) um eine "y"-Achse zu bewegen, die in der gleichen Richtung wie das Verbindungselement (30) aufgespannt ist.

3. Fahrzeugspiegelvorrichtung nach Anspruch 2, bei welcher die verstellbare Halterung auch als Anti-Vibrationseinrichtung für die Spiegelplatte (1) wirkt, wenn das "U"-förmige Verbindungselement (30), das auf der Führungsoberfläche (12) des feststehenden Teiles (10) gleitet, senkrecht zu einer "v"-Achse ist, um welche der bewegliche Teil (20) und die daran angebrachte Spiegelplatte (1) am stärksten vibrieren.

4. Fahrzeugspiegelvorrichtung nach Anspruch 3, bei welcher der Zwischenabschnitt (32) des Verbindungselements (30) und die Führungsoberfläche (12) des feststehenden Teiles (10) der verstellbaren Halterung, die den Abschnitt (32) aufnimmt, Teile haben, die durch den Spiegeltyp, für den die verstellbare Halterung konstruiert ist, und durch das Ausmaß der Vibrationen bestimmt sind, denen das Verbindungselement um die "v"-Achse ausgesetzt ist, um ein geeignetes Reibungsniveau zu schaffen, um die Vibrationen zu absorbieren.

5. Fahrzeugspiegelvorrichtung nach einem der Ansprüche 2 bis 4, bei welcher die Enden (31) des Verbindungselements (30), die nach außen gebogen sind, versetzt sind.

6. Fahrzeugspiegelvorrichtung nach einem der Ansprüche 2 bis 5, bei welcher die Befestigungseinrichtung ein Paar von hakenförmigen Vorsprüngen (23) umfaßt.

7. Fahrzeugspiegelvorrichtung nach Anspruch 6, bei welcher ein zweites Paar von hakenförmigen Vorsprüngen, die in einer Ausrichtung quer zu derjenigen des ersten Paares (33) angeordnet sind, die Enden (31) des Verbindungselements (30) in einer weniger engen Form als das erste Paar aufnimmt, um ein verringertes Reibungsausmaß zu schaffen, das für Mechanismen des Fernsteuerungstyps geeignet ist.

8. Fahrzeugspiegelvorrichtung nach Anspruch 7, bei welcher die Basis (24) des hohlen Abschnitts (22) des beweglichen Teiles (20) mindestens eine Öffnung (25) enthält, die mindestens ein Kabel aufnimmt, das für den Spiegelmechanismus des Fernsteuerungstyps erforderlich ist.

9. Fahrzeugspiegelvorrichtung nach einem der Ansprüche 6 bis 8, bei welcher der Abstand zwischen der Oberflächenführung (12) des feststehenden Teiles (10) der verstellbaren Halterung und dem Paar der hakenförmigen Vorsprünge (23) des beweglichen Teiles (20), der die Enden (31) des "U"-förmigen Verbindungselements (30). aufnimmt, der für den "von Hand einstellbaren" Typ erforderlich ist, geringfügig größer ist als der Abstand zwischen der Oberflächenführung (12) und dem Paar von hakenförmigen Vorsprüngen (23) des beweglichen Teiles (20), der für den Mechanismus des Fernsteuerungstyps erforderlich ist.

10. Fahrzeugspiegelvorrichtung nach einem der vorstehenden Ansprüche, bei welcher die Verbindungseinrichtung eine axiale Schraubenfeder enthält, die so eingebaut ist, daß sie durch Druck oder Zug zwischen dem feststehenden Teil (10) und dem beweglichen Teil (20) arbeitet.

11. Fahrzeugspiegelvorrichtung nach einem der vorstehenden Ansprüche, bei welcher die Vorrichtung einen äußeren Seitensichtspiegel enthält.

## Revendications

1. Dispositif formant rétroviseur pour véhicule destiné à être fixé sur la carrosserie d'un véhicule comprenant une plaque de rétroviseur (1), un support ajustable multi-usage placé sur celle-ci, et un logement (2) pour la plaque de rétroviseur et le support, dans lequel ledit support ajustable comprend une partie fixe concave (10) possédant une base (11) fixée au logement (2) ; une partie mobile (20) possédant un anneau (21) avec une surface externe convexe coïncidant avec une surface interne de ladite partie fixe (10), moyennant quoi ledit anneau (21) s'ajuste étroitement à et coulisse dans ladite partie fixe (10), et les moyens de raccordement (30, 31, 32) entre ladite partie fixe et ladite partie mobile, **caractérisé en ce que** ladite partie ajustable possède aussi une section creuse (22) ouverte au niveau d'une extrémité qui dépasse de et est concentrique audit anneau, la face arrière de la plaque de rétroviseur (1) étant fixée à la base (24) de ladite section creuse ; et lesdits moyens de raccordement (30, 31, 32) étant adaptés à l'ajustage du couple et/ou à l'absorption des vibrations lorsque le couple nécessaire pour un mécanisme de type rétroviseur « manuel » est plus important que celui qui est nécessaire pour un mécanisme de type rétroviseur commandé à distance.

2. Dispositif formant rétroviseur pour véhicule selon la revendication 1, dans lequel lesdits moyens de raccordement comprennent un élément de raccordement en forme de « U » (30) comprenant des extrémités retournées (31) qui sont fixées aux moyens de fixation dépassant de la base (24) de ladite section creuse (22) ; et une section intermédiaire curviligne (32) qui est maintenue fermement, mais qui est libre de coulisser sur une surface de guidage courbe (12) fixée à ou solidaire de ladite partie fixe (10) du support ajustable, moyennant quoi une quantité de force plus importante est nécessaire pour déplacer la partie mobile (20) et par conséquent la plaque de rétroviseur (1) autour d'un axe « x » qui est perpendiculaire à l'élément de raccordement (30) et à la section intermédiaire (32), et une quantité de force plus faible est nécessaire pour déplacer la partie mobile (20) et la plaque de rétroviseur (1) autour d'un axe « y » utilisé dans la même direction que l'élément de raccordement.

3. Dispositif formant rétroviseur pour véhicule selon la revendication 2, dans lequel ledit support ajustable est aussi utilisé comme un dispositif anti-vibration pour la plaque de rétroviseur (1), dans lequel ledit élément de raccordement en forme de « U » (30) qui coulisse sur ladite surface de guidage (12) de la partie fixe (10) est perpendiculaire à un axe « v » autour duquel la partie mobile (20) et la plaque de rétroviseur fixée (1) vibrent le plus.

4. Dispositif formant rétroviseur pour véhicule selon la revendication 3, dans lequel ladite section intermédiaire (32) de l'élément de raccordement (30) et la surface de guidage (12) de la partie fixe (10) du support ajustable recevant ladite section (32) possèdent des pièces qui sont déterminées par le type de rétroviseur pour lequel le support ajustable est conçu et par le niveau de vibration auquel l'élément de raccordement est soumis autour dudit axe « v » afin de fournir un niveau de frottement adéquat pour absorber les vibrations.

5. Dispositif formant rétroviseur pour véhicule selon l'une quelconque des revendications 2 à 4, dans lequel les extrémités (31) de l'élément de raccordement (30) qui sont tournées vers l'extérieur sont placées en quinconce.

6. Dispositif formant rétroviseur pour véhicule selon l'une quelconque des revendications 2 à 5, dans lequel lesdits moyens de fixation comprennent une paire de saillies en forme de crochet (23).

7. Dispositif formant rétroviseur pour véhicule selon la revendication 6, dans lequel une seconde paire de saillies en forme de crochet utilisées dans un alignement transversal à celui de la première paire (33) reçoit les extrémités (31) de l'élément de raccordement (30) d'une manière moins ferme que ladite première paire, pour fournir un degré de frottement réduit adéquat pour les mécanismes de type commandé à distance.

8. Dispositif formant rétroviseur pour véhicule selon la revendication 7, dans lequel ladite base (24) de la section creuse (22) de la partie mobile (20) comprend au moins une ouverture (25) qui reçoit au moins un câble nécessaire audit mécanisme de type rétroviseur commandé à distance.

9. Dispositif formant rétroviseur pour véhicule selon l'une quelconque des revendications 6 à 8, dans lequel la distance entre la surface de guidage (12) de la partie fixe (10) du support ajustable et la paire de saillies en forme de crochet (23) de la partie mobile (20) qui reçoit les extrémités (31) de l'élément de raccordement en forme de « U » (30) nécessaire au mécanisme de type « manuel » est légèrement supérieure à la distance entre la surface de guidage (12) et la paire de saillies en forme de crochet (23) de la partie mobile (20) nécessaire au mécanisme de type commandé à distance.

10. Dispositif formant rétroviseur pour véhicule selon l'une quelconque des revendications précédentes, dans lequel lesdits moyens de raccordement comprennent un ressort hélicoïdal axial qui est monté pour fonctionner par compression ou par traction entre ladite partie fixe (10) et ladite partie mobile (20).

11. Dispositif formant rétroviseur pour véhicule selon l'une quelconque des revendications précédentes, dans lequel ledit dispositif comprend un rétroviseur latéral extérieur.
